# EUROPEAN PATENT SPECIFICATION

(11) **EP 1 334 581 B1**
(45) Date of publication and mention of the grant of the patent: **21.02.2007**
(21) Application number: 00990886.4
(22) Date of filing: 30.10.2000
(51) Int. Cl.: H04L 1/18

(54) **AUTOMATIC REQUEST PROTOCOL BASED PACKET TRANSMISSION USING PUNCTURED CODES**
PAKETÜBERTRAGUNG MIT AUTOMATISCHEM AUFFORDERUNGSPROTOKOLL MIT VERWENDUNG VON PUNKTIERTEN KODES
TRANSMISSION PAR PAQUETS FONDE SUR LE PROTOCOLE DE DEMANDE AUTOMATIQUE UTILISANT UN CODE DISCONTINU

(43) Date of publication of application: 13.08.2003
(73) Proprietor: Nortel Networks Limited, St.Laurent, Quebec H4S 2A9 (CA)
(72) Inventor: WANG, Rui, R., (CA); MING, Jia, Ottawa, Ontaria K2B 5P3 (CA); GARMONOV, Alexander V., Voronezh, 394062 (RU); SAVINKOV, Andrew Yu, Voronezh, 394053 (RU); ZHDANOV, Alexander E., Voronezh, 394000 (RU)
(74) Representative: Ertl, Nicholas Justin
(86) International application number: PCT/RU2000/000430
(87) International publication number: WO 2002/037743

(56) References cited:
- DE-A- 19 736 676
- US-A- 5 954 839
- NARAYANAN K R ET AL: "PHYSICAL LAYER DESIGN FOR PACKET DATA OVER IS-136" IEEE VEHICULAR TECHNOLOGY CONFERENCE,US,NEW YORK, IEEE, vol. CONF. 47, 4 May 1997 (1997-05-04), pages 1029-1033, XP000736764 ISBN: 0-7803-3660-7
- ALFARO DE L ET AL: "CODES FOR SECOND AND THIRD ORDER GH-ARQ SCHEMES" IEEE TRANSACTIONS ON COMMUNICATIONS,US,IEEE INC. NEW YORK, vol. 42, no. 2/03/04, 1 February 1994 (1994-02-01), pages 899-910, XP000447343 ISSN: 0090-6778

## Description

The invention relates to digital data transmission systems, and more particularly to automatic request protocol based packet transmission and reception methods and corresponding apparatus.

### Background of the Invention

The possibility exists that errors will occur in packet data received over a noisy transmission medium such as a wireless communications channel. Error correction coding can be used to reduce error rates at the expense of throughput. A packet can contain a certain number of errors, and still allow for the correct decoding of the packet's data content.

Convolutional coding is a convenient and widely used method of error correction coding. A decoding algorithm proposed by Viterbi and described in Andrew J. Viterbi "CDMA. Principles of Spread Spectrum Communication", Addison-Wesley Wireless Communications Series, 1995, pp. 132 - 138 is widely used in communication systems and allows the achievement of the highest coding gain. Unfortunately, Viterbi decoder complexity increases exponentially as a function of constraint length limiting practical block sizes which can be decoded.

Another interference stable coding method is referred to as "turbo coding" taught in an article by C. Berrou, A. Glaviex, P. Thitimajshina "Near Shannon limit error - correcting coding and decoding", IEEE Transactions in Information Theory, 2/1993.

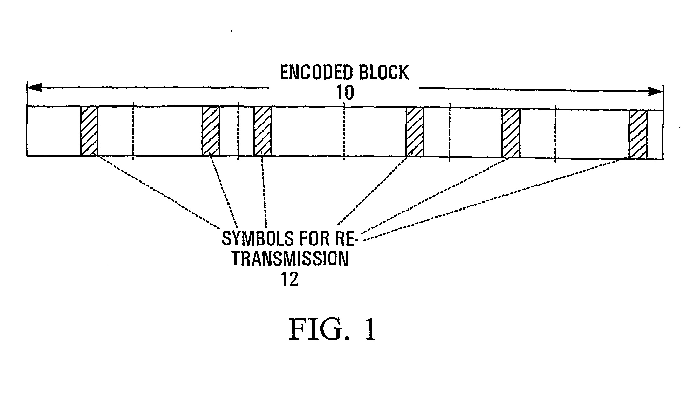

When using convolutional or turbo decoding, data symbols and check symbols are transmitted, and the puncturing or erasing of some check symbols is possible (see J. Clark, J. Kane "Error correction based coding in digital communication systems", Statistic Communication Theory, edition 28, M., Radio and Communication, 1987). The effect of puncturing is to increase the rate of the code. An example of this is shown in Figure 1 in which an encoded block 10 is shown, and several symbols 12 are deleted or punctured prior to transmitting the block. The location of the punctured symbols is known at both the receiver and transmitter, and is factored into whatever decoding strategy is employed.

Convolutional Viterbi decoding and turbo decoding allow for the performance of soft decision decoding. Typically, when a packet is received and decoded, and an identification of the existence of a non-correctable error is made, some portion of the packet needs to be retransmitted. Previously, the entire packet was retransmitted. It was then discovered that the retransmission of only a small part of the data packet after the occurrence of a non-correctable error is often sufficient to allow the packet to be correctly decoded. The portion of the packet which is retransmitted is combined with the originally transmitted packet, and the result is re-decoded.

Another known decoding method is described in the article "Rate Compatible Punctured Convolutional Codes (RCPC Codes) and their Applications" by J. Hagenauer, IEEE Trans. Commun., Vol. 36, Apr. 1988, pp. 389 - 400. This decoding method presents variable rate punctured convolutional codes which are able to adapt to changes in the interference conditions of the data transmission channel. In this method, certain symbols are punctured at source code transmission time, and the punctured symbols are the ones which are transmitted in a separate re-transmit packet in the event the packet is received in error. The transmitted punctured symbols are combined with the originally transmitted packet and the result is re-decoded. Similar approaches are described in "Rate Compatible Punctured Turbo (RCPT) Codes in a Hybrid FEC/ARQ Systems" by D.N. Rowitch and L.B. Milstein in Proc. Communications Theory Mini - Conference of GLOBECOM' 97, Phoenix, AZ, Nov. 1997, pp. 55 - 59, and in U.S. Patent No. 5,983,384 to John Anderson Fergus Ross entitled "Turbo-coding with staged data transmission and processing", Nov. 9, 1999.

Another existing method is described in German patent DE 19736676 to Friedbert et al, entitled "Automatic request protocol based packet transmission and transmission channel repetition method in digital system", October 12, 1998. This method involves the use of turbo coding at the transmission side and soft decision turbo decoding at the receiving side. The system is provided with a reverse channel by which the receiver requests erroneous packet retransmissions. An RCPTC (rate compatible punctured turbo code) code is used as the turbo code. When re-transmitting for the erroneously received packet, at least a part of the information punctured from the variable rate turbo code at the previous transmission is transmitted. This additional information is added to the available information at the receiving side, and the combined sequence is again decoded. This process is repeated until the packet is decoded correctly. More specifically, the method involves first defining the cyclic redundancy check sum and adding it to an information sequence. After this, turbo coding of the information sequence is performed. Re-request (retransmission request) blocks are formed by dividing non-systematic code components into m blocks, N is the size of the non-systematic code components where P is the re-request block size, and where m= N/P. These re-request blocks are saved in memory. The initial encoded packet is transmitted containing a systematic code part and some re-request blocks. In the event proper decoding is not performed, the next non-transmitted re-request block is transmitted if an error is detected. This is repeated until the packet is correctly decoded, or until all ra-request blocks have been transmitted. This method provides a reduced number of transmitted code symbols per information packet. Disadvantageously, most digital communication systems use fixed size packets for code symbols and the use of this method requires a significant change for the system.

In previous approaches which adopted a "send-and-wait" protocol, i.e. new data is not sent until the current packet is correctly decoded, system efficiency is reduced. In approaches providing variable packet size for different channel conditions, the retransmitted packet size is a design parameter, as is the average packet delay. The larger the retransmitted packet size, the less the number of re-requests, hence the less the average packet delay. However, a larger retransmitted packet size may reduce the system efficiency, as the receiver may not need such a large retransmitted packet to decode data correctly. The system capacity used for over-retransmitted data can be better used for transmitting useful new data.

### Summary of the Invention

The invention provides the data transmission method of claim 1, the data reception method of claim 23, the transmetter of claim 27, the receiver of claim 40, and the computer readable media of claims 43 and 44.

Embodiments of the invention provide methods and systems for automatic request and repetition with interference stability, providing non-uniform and adaptive data protection from interference for fixed length packet communication systems. Advantageously, the use of a fixed block size makes protocol design and implementation easier. Furthermore, delay is reduced as regular data transmission is not suspended for retransmissions, but rather the retransmissions are embedded within punctured symbol locations of regular data transmissions resulting in an improved throughput. In other words, this is not a "send-and-wait" system. There is no waiting (idle time) due to packets requiring retransmission and therefore system efficiency is improved.

The invention according to a first broad aspect, provides a fixed block size data transmission method, in which at least a subset of a set of encoded symbols punctured from previous error correction encoded block is inserted into punctured symbol locations of at least one future encoded block. The future block thus generated is then transmitted.

A sequence of input blocks is encoded to produce respective encoded blocks. A component of each encoded block is punctured in punctured symbol locations, and this is the non-transmitted component. For each encoded block, re-request (retransmission request) blocks are defined each containing a respective subset of the symbols punctured from that encoded block. One of these re-request blocks is inserted into the punctured symbol locations of a future encoded block should the encoded block require additional redundancy at the receiver to decode.

In some cases, transmission of a single re-request block is not sufficient to allow decoding of the associated encoded block at the receiver. In this case, in additional future blocks, further re-request blocks for the encoded block are inserted in further future encoded blocks.

A re-request queue may be maintained identifying any encoded blocks which have not been successfully received at a receiver, the re-request queue including an identification of an oldest encoded block which has not been successfully received at a receiver. The re-request blocks are then inserted, starting with the one associated with the oldest encoded block.

In one embodiment, after transmitting all of the re-request blocks for a given encoded block, the entire encoded block is retransmitted. In another embodiment, when the number of re-requests exceeds a certain number, an entire encoded block is retransmitted. In another embodiment, when the number of re-requests exceeds a certain number, re-request blocks for multiple encoded blocks are transmitted in a single block.

Re-requests may be added to the queue due to the reception of a request for retransmission of a particular previous encoded block, or due to the time-out for acknowledgement of a particular block.

After an acknowledgement has been received for a particular encoded block the identification of the particular encoded block is removed from the re-request queue.

In another embodiment, power control is performed as a function of a number of re-requests required. In another embodiment, the size of the inserted component is increased as a function of the number of re-requests until entire future encoded blocks are dedicated to retransmission.

Further embodiments provide transmitters adapted to implement any of the above methods, and a computer readable medium containing instructions for implementing any of the above methods.

The invention according to another broad aspect provides a data reception method for receiving blocks generated using the above discussed data transmission method. At a receiver, a received block is separated into symbols of a current block and symbols of a re-request block contained in punctured symbol locations of the received block, the re-request block containing symbols of a previous block. Next, the symbols of the current block are decoded. The symbols of the re-request block are combined with a previous version of the previous block to produce a combined block and this combined block is then decoded.

The combining is done at the receiver using soft-combining. When retransmission with soft combining (before the decoder) is involved, the blocks with retransmission get more protection than the blocks with no retransmission, which makes the protection "non-uniform" from block to block. Since the protection is provided based on needs (i.e. channel conditions), the protection is also adaptive.

In some embodiments, a re-request is sent in respect of the current block if not successfully decoded and a re-request is sent in respect of the combined block if it is not successfully decoded.

Symbols of the current block are stored in memory for subsequent combination with further components which might be subsequently received, and the combined block may also-be stored in memory, particularly if not decoded correctly.

In some embodiments, an acknowledgement is sent each time a block is correctly decoded.

Further embodiments provide receivers adapted to implement any of the above reception methods, and a computer readable medium containing instructions for implementing any of the above methods.

### Brief Description of the Drawings

Figure 1 is an illustration of an encoded block from which symbols have been punctured;
Figure 2 is a block diagram of a transmitter and receiver adapted to implement an automatic request (ARQ) protocol based packet transmission method provided by an embodiment of the invention;
Figures 3A and 3B are flowcharts of transmitter ARQ functionality implemented by the transmitter of Figure 2;
Figure 4 is a flowchart of the receiver ARQ functionality implemented by the receiver of Figure 2;
Figures 5A and 5B are data structures for implementing transmit re-request functionality; and
Figure 6 is a data structure for implementing receive re-request functionality.

### Detailed Description of Invention

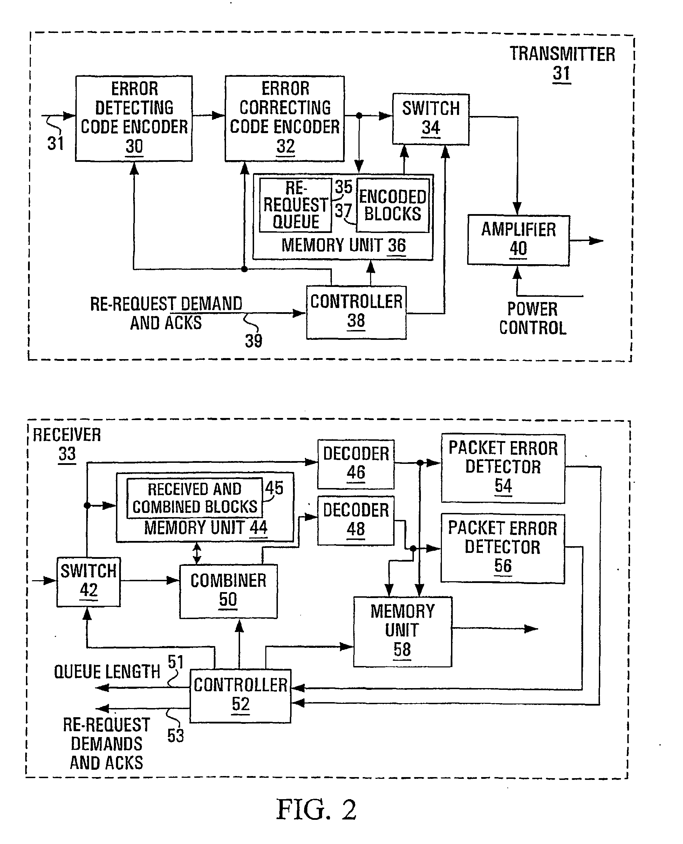

Referring now to Figure 2, a packet communication system provided by an embodiment of the invention includes a transmitter 31 and a receiver 33.

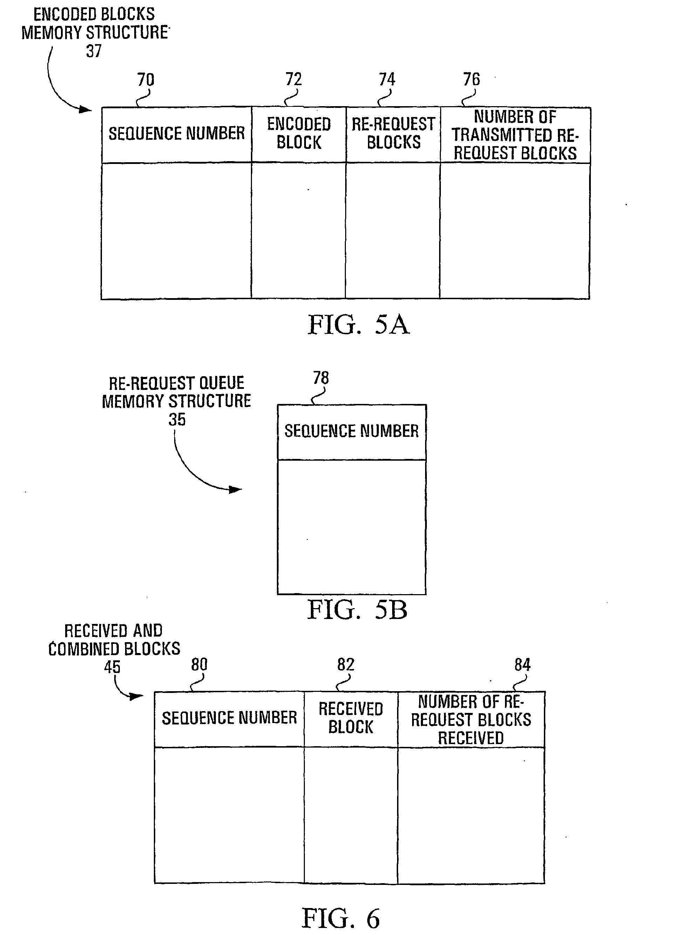

The transmitter has a serial error detecting code encoder 30 a first input of which is a sequence of data blocks 31 to be transmitted. The error detecting code encoder 30 is connected to a first input of an error correcting code encoder 32. The error correcting code encoder 32 output is connected to a first input of a switch 34 and to a first input of a memory unit 36. The output of the switch 34 is connected to an amplifier 40 the output of which is the output of the transmitter 31 transmitted over the air interface to the receiver 33. A controller 38 is provided for processing re-requests and acknowledgements 39. The controller has a first output connected to a second input to the error detecting code encoder 30, a second output connected to a second input of the error correcting code encoder 32, a third output connected to a second input to the memory unit 36, and a fourth output connected to a second input of the switch 34. The memory unit 36 has an output connected to the switch 34. The memory unit 36 includes a re-request queue memory structure 35, and also has an encoded blocks memory structure 37. Referring now to Figure 5A, the encoded blocks memory structure 37 has records consisting of a sequence number field 70 which allows an identification of encoded blocks. Encoded blocks are stored in field 72. Also, re-request blocks are stored for each encoded block in field 74. Finally, a field 76 identifies how many re-request blocks have been transmitted if any. The re-request queue memory structure 37 simply identifies sequence numbers 78 for which re-requests have been received from the receiver 33. Re-request blocks are described in detail further below.

The receiver 33 has a switch 42 a first output of which is connected with the first input of a memory unit 44 and the input of a first decoder 46. The switch 42 has a second output connected with a first input of a combiner 50. The memory unit 44 has a second input from a first output of the combiner 50. The combiner 50 has a second input from an output of the memory unit 44. The output of the first decoder 46 is connected to the input of a first packet error detector 54. A second output of the combiner 50 is connected with the input of the second decoder 48. The output of the second decoder 48 is connected to an input of a second packet error detector 56. The outputs of the packet error detectors 54 and 56 are coupled with first and second inputs of a controller 52, respectively. A first output of the controller 52 is connected with a first input to a second memory unit 58, the second and third inputs of which are coupled with the outputs of the first and second decoders 46,48, respectively. The output of the second memory unit 58 is the receiver 33 output. A second output of the controller 52 is connected to a third input of the combiner 50. A third output of the controller 52 is connected to a second input of the switch 42. A fourth output of the controller 52 is a queue length output 51 and a fifth output is a re-request output 53. The memory unit 44 has a received and combined blocks memory structure 45 having a record structure which is illustrated in Figure 6 by way of example. Each record has a sequence number field 80, space for the received block 82 (or for subsequent combinations of received blocks with other re-request blocks), and has a field 84 indicating the number of re-request blocks received for a given sequence number.

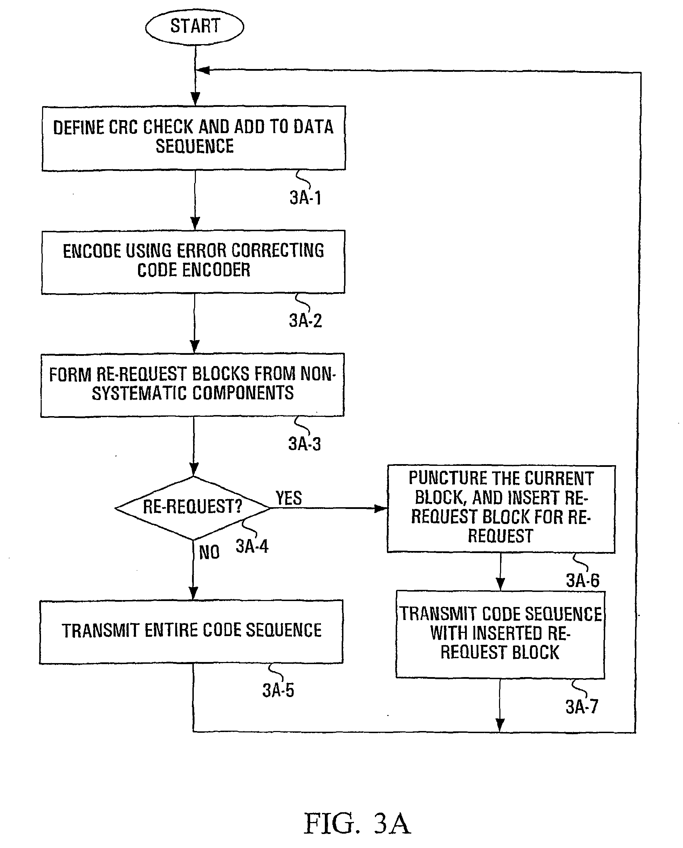

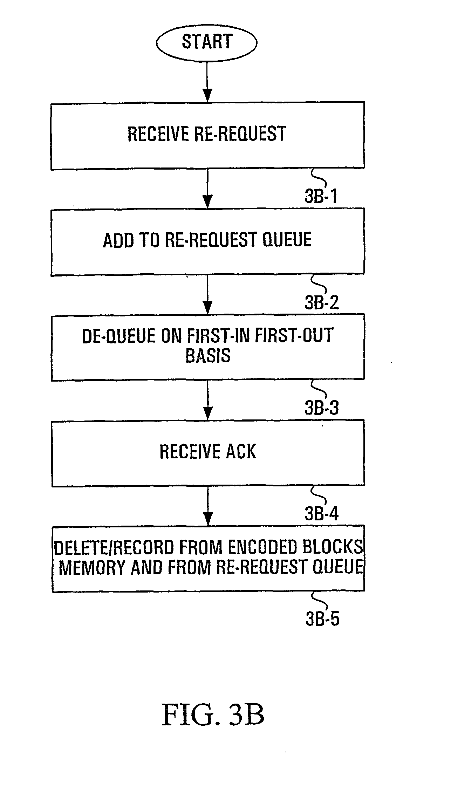

The operation of the transmitter 31 in the transmission of an input data block will now be described with further reference to Figure 2, and with reference to the flowcharts of Figure 3A which details transmit block construction, and Figure 3B which details the maintenance of the re-request queue 35. To begin, the error detecting code encoder 30 defines an error correcting cyclic redundancy check (CRC) sum and adds this to the input data block (step 3A-1). Next, the block, including the CRC is encoded using the error correcting code encoder 32 (step 3A-2). This can be any error correcting code, for example but not limited to a block code, convolutional code, turbo code, so long as the code can be decoded using soft decoding at the receiver. This is because only soft-decoding can employ partial retransmission and soft combining. The code may be a systematic code, or a non-systematic code. The encoded block thus generated is stored in the encoded blocks memory structure 37 in memory unit 36 along with the block's sequence number. Next, for each block, re-request blocks are formed from code components in punctured symbol locations to be made available for retransmissions of re-request blocks of prior encoded blocks should this be necessary. For Turbo codes, it is usual to puncture non-systematic bits. But recently, there are some proposals to puncture some of systematic bits. For non-systematic codes, such as traditional convolutional code, no systematic bits are available for being punctured. For block codes, it is very likely that a systematic code will be used. In this case, to randomize the puncturing effect, some systematic bits must be punctured. More generally, re-request blocks may be formed of any selection of symbols. In one embodiment, these are formed by dividing the punctured code components into m re-request blocks of size P symbols each, where M is the number of punctured code components and *m=M*/*P.* Another more general way of viewing this is to start with an encoded block size N, and divide this into K sub-blocks of size *P=N*/*K.* Then, m of these are aside as re-request blocks, with the remaining K-m being transmitted. With this approach, it is possible to think of m as being variable. It is zero when there is no retransmission for previous blocks required. It can then be increased in any suitable fashion depending upon the number of retransmissions required. For example, it can jump to a fixed number ml. It may follow a sequence of values 0, m₁, m₂, ..., m_{Max} where m_{Max} < K. Alternatively, m can be allowed to eventually equal K in which case an entire packet is devoted to retransmissions. These re-request blocks are saved to the encoded blocks memory structure 37 of memory unit 36 (step 3A-3) in association with the block sequence number. In the event controller 38 determines that the re-request queue 35 has no re-requests (no path step 3A-4), then controller 38 controls the switch 34 such that the entire code sequence output by the error correcting code encoder 32 is transmitted in step 3A-5. Alternatively, if a re-request transmission is required, then controller 38 signals switch 34 to puncture the current encoded block output by the error correcting code encoder 32 and insert in place of the punctured symbols a re-request block previously stored in memory unit 36 instead of the punctured symbols step 3A-6. More specifically, for the next encoded block identified in the re-request queue 35, the next untransmitted re-request block (determined from number of transmitted re-request blocks field 76 in encoded blocks table 37) for that encoded block is inserted in place of the punctured symbols. Up to m re-request blocks may be inserted in the encoded block. The number of transmitted re-request blocks field 76 for that encoded block is incremented. The block thus generated is then passed to amplifier 40 and transmitted in step 3A-7.

Referring now to Figure 3B, a second input to the transmitter 31 consists of re-requests and acknowledgements 39 sent by the receiver 33 which identify sequence numbers of previously transmitted encoded blocks which have not been correctly received and have been received correctly respectively (step 3B-1). The controller 38 maintains the re-request queue 35 by adding sequence numbers of re-requests to the re-request queue (step 3B-2), and by de-queuing these on a first-in-first-out basis as described above (step 3B-3). In one embodiment, in the event the re-request queue becomes greater than a certain size, the transmission of the current block is suspended, and an unsuccessfully transmitted encoded block 72 in encoded blocks memory structure 37 is retransmitted in its entirety. In another embodiment, when the re-request queue 35 becomes a certain size, a single transmit block is generated containing re-request blocks for multiple encoded blocks identified in the re-request queue, and the transmit block is transmitted with no new data. At step 3B-4 an acknowledgement is received identifying the sequence number of a successfully received and decoded block. The re-request entry in the re-request queue 35 and the corresponding encoded block entry in the encoded blocks memory structure 37 are deleted when this occurs (or allowed to be overwritten).

The triggering of a retransmission can be done using any suitable mechanism. In the example being described in detail, retransmission is triggered by a specific request from the receiver for the retransmission of a particular encoded block. In addition to or alternative to the request based retransmission, a retransmission can be triggered in the event a previous encoded block written to memory 36 has not been acknowledged for some period of time in which case a re-request is added to the re-request queue 35 when such a time out occurs.

In one embodiment, in the event all of the re-request blocks for a given encoded block have been transmitted and the block can still not be decoded, the next encoded block is not sent, but rather the process is started afresh for that block by sending the entire data block.

In another embodiment, a power control threshold applied by amplifier 40 is selected depending on the number of re-requests in the re-request queue 35, so as to increase the transmitted signal power as a function of the increasing length of the queue. Power control provides additional protection to packets suffering severe interference, so that a real data transmission rate can be preserved. In another embodiment, for systems with fixed transmitting power which cannot benefit from the power control aspect described above, the retransmission portion of a new packet can be increased in size, until a full packet is dedicated to retransmission.

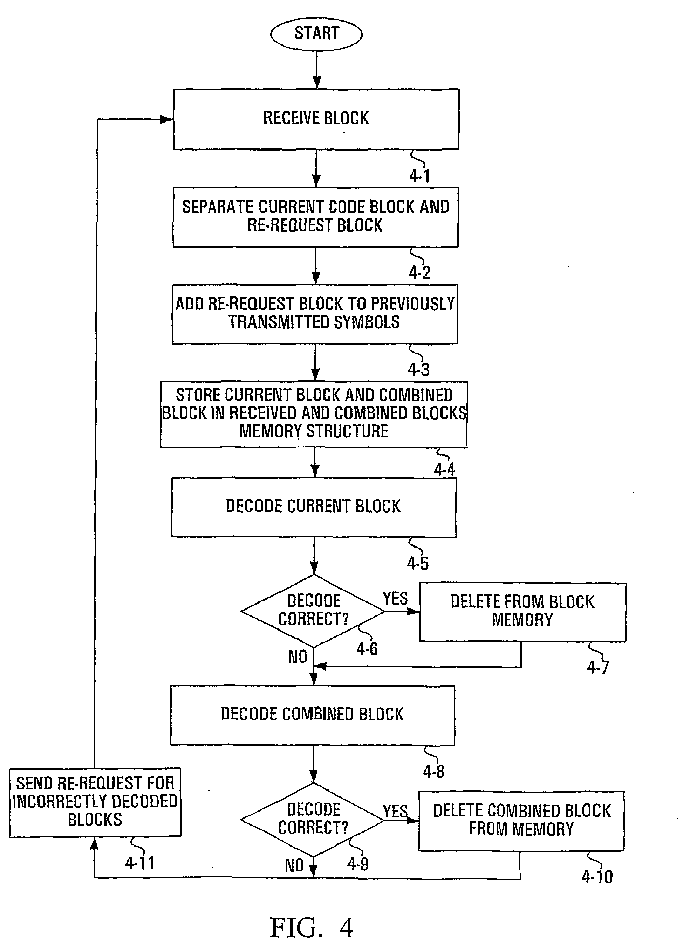

The operation of the receiver 33 in the reception of transmitted blocks will now be described with reference to the flowchart of Figure 4. The process starts with the reception of a block (step 4-1). Next, in the event there is a re-request block embedded within the current encoded block, this is separated out at step 4-2 by switch 42 which performs a demultiplexing function. In place of the punctured symbols removed from the current block, neutral values (nulls) are placed. Next, the extracted re-request block is combined with symbols previously transmitted for the respective block at step 4-3 with combiner 50. If the re-request block has not been transmitted before, then there should be nulls in the place of the symbols in the primary encoded packet. The combined sequence and the current block are both written to the received and combined blocks memory structure 45 (step 4-4) in association with respective sequence numbers. Next, decoder 46 decodes the current block at step 4-5. If the current encoded block is correctly decoded (yes path step 4-6), then it is deleted from the received and combined blocks memory structure 45 (step 4-7). Decoder 48 decodes the old block at step 4-8. The old block is removed from the received and combined blocks memory structure 45 (step 4-9) if it is decoded correctly (yes path, step 4-10). Memory unit 58 stores the correctly decoded block allowing for any necessary subsequent reordering of data.

Next, after completion of decoding, if either the current block or the combined block were decoded incorrectly then a re-request is transmitted to the receiver identifying the encoded block(s) which has not yet been correctly decoded (step 4-11). Alternatively, a time out mechanism at the transmitter may be employed. In addition, an acknowledgement may also be sent for correctly decoded encoded block(s).

It is to be understood that there are many suitable mechanisms of causing a re-request block to be transmitted which may be employed other than the specific methods exemplified above.

In the above described embodiment, the re-transmitted components are limited to sub-blocks which were not transmitted with the initial transmission for a given encoded block. More generally, these can be allowed to include components which were transmitted. For example, after all non-transmitted components have been transmitted, the method can return to transmitting previously transmitted components.

Now several examples will be provided using the following previously defined terms:
N = encoded block size
T = fixed transmit block size
P = sub-block (and re-request) block size for K blocks = N/K
m = number of sub-blocks of the current encoded block to be punctured and replaced with re-request blocks from previous encoded blocks
K-m = number of sub-blocks of the current encoded block transmitted.

In a first example, N=T=1000, so the encoded block size = fixed transmit block size, and the entire encoded block can be sent when there is no requirement for any retransmission. Each encoded block is comprised of K=20 sub blocks of size P=50. When retransmission is required, a sub-block is punctured, and replaced with a non-transmitted sub-block of a previous encoded block. In one example, the number m available for puncturing is a fixed number, for example m=2. In another embodiment, m increases as a function of the number of re-requests pending. For example, m might follow a sequence m=2,4,6,... M_{Max}. In the event M_{Max} is allowed to increase to equal K, an entire block can be dedicated to retransmissions.

In another example, N=1000, and T=800 so the encoded block size N is greater than the fixed transmit block size T, meaning that the entire encoded block cannot be sent even when there is no requirement for any retransmission. Again, each encoded block is comprised of K=20 sub-blocks of size P=50. When no retransmission is required, 200 symbols, or four sub-blocks are punctured to reduce the block size from 1000 to 800. These sub-blocks are not replaced with anything. When retransmission is required, a further sub-block is punctured, and replaced with a non-transmitted sub-block of a previous packet.

In one embodiment the fixed transmit block size is equal to the encoded block size so that in the event no retransmission is required, the entire encoded block is transmitted. In another embodiment, the fixed transmit block size is smaller than the encoded size meaning there will always be some puncturing.

Numerous modifications and variations of the present invention are possible in light of the above teachings. It is therefore to be understood that within the scope of the appended claims, the invention may be practised otherwise than as specifically described herein.

## Claims

1. A fixed block size data transmission method comprising inserting (3A-6) encoded symbols punctured from a previous error correction encoded block into punctured symbol locations of at least one future encoded block and transmitting (3A-7) the at least one future encoded block.

2. A method according to claim 1 further comprising:
encoding (3A-2) input data blocks to produce a sequence of respective encoded blocks;
for each encoded block, defining (3A-3) a respective plurality of re-request (retransmission request) blocks each containing a respective subset of a set of encoded symbols in punctured symbol locations of the encoded block;
wherein inserting (3A-6) encoded symbols punctured from a previous encoded block into punctured symbol locations of at least one future encoded block comprises inserting at least one of the re-request blocks of a previous encoded block into punctured symbol locations of at least one future encoded block.

3. A method according to claim 1 further comprising:
inserting some encoded symbols punctured from the previous encoded block into punctured symbol locations of a plurality of future encoded blocks.

4. A method according to claim 2 further comprising:
inserting a plurality of the re-request blocks of the previous encoded block into punctured symbol locations of a respective plurality of future encoded blocks.

5. A method according to claim 1 further comprising:
maintaining a re-request queue (35) identifying any encoded blocks which have not been successfully received at a receiver, the re-request queue (35) including an identification of a sequence in which the encoded blocks were not successfully received at a receiver.

6. A method according to claim 5 further comprising:
inserting symbols of previous encoded blocks identified in said re-request queue, on the basis of the sequence.

7. A method according to claim 2 further comprising after transmitting all of the re-request blocks for a given previous encoded block, retransmitting previously transmitted components for the previous encoded block in punctured symbol locations of the at least one future encoded block.

8. A method according to claim 2 further comprising:
after transmitting all of the re-request blocks for a given encoded block, retransmitting the encoded block.

9. A method according to claim 1 wherein the fixed block size for transmission is the same as the encoded block size, and in the event there are no symbols of a previous encoded block which require insertion, the entire future encoded block is transmitted (3A-5).

10. A method according to claim 1 wherein the fixed block size for transmission is smaller than the encoded block size, and the encoded blocks are always punctured in at least as many symbol locations as required to reduce block size to the fixed block size for transmission, and in further locations in which encoded symbols punctured from a previous error correction block are to be inserted.

11. A method according to claim 1 wherein a number of symbols from previous blocks inserted into a future block is increased as a function of a number of previous blocks for which retransmission is required.

12. A method according to claim 1 further comprising, after inserting all the symbols punctured from a particular previous encoded block in one or more future blocks, inserting symbols which were transmitted for the previous block in one or more future blocks.

13. A method according to claim 11 wherein the number of symbols from previous blocks inserted into a future block can be increased to occupy the entire future block.

14. A method according to claim 1 further comprising:
receiving a request for retransmission in respect of a particular previous encoded block;
wherein inserting (3A-6) encoded symbols punctured from a previous error correction encoded block comprises inserting encoded symbols punctured from the particular previous encoded block.

15. A method according to claim 1 further comprising:
maintaining a re-request queue (35) identifying encoded blocks which have not been successfully transmitted;
wherein inserting (3A-6) encoded symbols punctured from a previous error correction encoded block into punctured symbol locations of at least one future encoded block is sequentially done for previous encoded blocks identified in the re-request queue.

16. A method according to claim 15 wherein an identification of a particular encoded block is added to the re-request queue (35) upon receipt of a re-request for the particular encoded block.

17. A method according to claim 15 wherein an identification of a particular encoded block is added to the re-request queue (35) after an acknowledgement has not been received for the particular encoded block for a predetermined period of time.

18. A method according to claim 15 wherein an identification of a particular encoded block is removed from the re-request queue (35) after an acknowledgement has been received for the particular encoded block.

19. A method according to claim 15 further comprising:
performing power control as a function of a number of re-requests in the re-request queue.

20. A method according to claim 1 further comprising:
prior to performing the error correction encoding, performing an error detection encoding.

21. A method according to claim 20 wherein performing an error detection encoding comprises adding a CRC (cyclic redundancy check) field.

22. A method according to claim 15 further comprising:
as a function of a number of re-requests in the re-request queue, increasing a number of symbols inserted into the future encoded block until entire future encoded blocks are dedicated to retransmission.

23. A data reception method comprising:
separating (4-2) a received block into symbols of a current block and symbols of at least one re-request block contained in punctured symbol locations of the received block, the re-request block(s) containing symbols of at least one previous block;
decoding (4-5) the symbols of the current block;
for each previous block for which there is a respective at least one re-request block:
combining the symbols of the respective at least one re-request block with a previous version of the previous block to produce a combined block and decoding (4-8) the symbols of the combined block.

24. A method according to claim 23 further comprising:
sending (4-11) a re-request in respect of the current block if not successfully decoded; and
for each combined block, sending (4-11) a re-request in respect of the combined block if the combined block is not successfully decoded.

25. A method according to claim 23 further comprising:
storing (4-4) the symbols of the current block and each combined block in a memory structure;
in the event the current block and/or combined block is successfully decoded, deleting (4-7) the respective block from the memory structure.

26. A method according to claim 23 further comprising:
sending an acknowledgement each time a block is correctly decoded.

27. A transmitter (31) comprising:
an error correction encoder (32) adapted to encode a sequence of input data blocks to produce a corresponding sequence of encoded blocks having fixed length;
a puncturing circuit adapted to insert encoded symbols punctured from a previous encoded block into punctured symbol locations of at least one future encoded block to be transmitted

28. A transmitter according to claim 27 further comprising:
a memory structure (36) adapted to contain, for each encoded block, a respective plurality of re-request blocks each containing a respective subset of the respective set of encoded symbols punctured from the encoded block;
wherein the puncturing circuit is adapted to insert one of the re-request blocks of a previous encoded block into punctured symbol locations of a future encoded block.

29. A transmitter according to claim 27 wherein the puncturing circuit is adapted to insert a plurality of subsets of the set of encoded symbols punctured from the previous encoded block into punctured symbol locations of a respective plurality of future encoded blocks.

30. A transmitter according to claim 27 further comprising:
a re-request queue (35) identifying a sequence of encoded blocks which have not been successfully received at a receiver;
wherein the puncturing circuit is adapted to insert symbols punctured from encoded blocks identified in the re-request queue on the basis of the sequence.

31. A transmitter according to claim 27 further adapted to, after encoding each input data block to produce the respective encoded block, store the respective plurality of re-request blocks in the memory structure (36) together with the encoded block.

32. A transmitter according to claim 29 adapted to retransmit a given encoded block after all of the re-request blocks for the given encoded block have been transmitted.

33. A transmitter according to claim 27 further comprising:
an input (39) adapted to receive a request for retransmission of a particular previous encoded block;
wherein the puncturing circuit is adapted to insert symbols punctured from the particular previous encoded block.

34. A transmitter according to claim 27 wherein the puncturing circuit is adaptive to insert encoded symbols punctured from a previous error correction encoded block into punctured symbol locations of at least one future encoded block sequentially for previous encoded blocks identified in the re-request queue.

35. A transmitter according to claim 34 further adapted to add an identification of a particular encoded block to the re-request queue upon receipt of a re-request for that encoded block.

36. A transmitter according to claim 34 further adapted to add an identification of a particular encoded block to the re-request queue after an acknowledgement has not been received for the particular encoded block for a predetermined period of time.

37. A transmitter according to claim 34 further adapted to remove the identification of a particular encoded block from the re-request queue after an acknowledgement has been received for the particular encoded block.

38. A transmitter according to claim 27 further adapted to perform power control as a function of a number of re-requests required.

39. A transmitter according to claim 27 further comprising an error detection encoder (30) which performs error detection encoding prior to performing the error correction encoding.

40. A receiver (33) comprising:
a demultiplexer (42) adapted to separate a received block into symbols of a current block and symbols of at least one re-request block contained in punctured symbol locations of the received block, the at least one re-request block containing symbols of at least one previous block;
first decoding circuitry (46) adapted to decode the symbols of the current block;
a combiner (50) adapted to combine the symbols of the at least one re-request block with a previous version of each said at least one previous block to produce a combined block in respect of each said at least one previous block; and
second decoding circuitry (48) adapted to decode the combined blocks.

41. A receiver according to claim 40 further comprising: retransmission request means (52) adapted to send a re-request in respect of the current block if not successfully decoded, and for each combined block, to send a re-request in respect of the combined block if the combined block is not successfully decoded.

42. A receiver according to claim 40 further comprising: acknowledgement means adapted to send an acknowledgement each time a block is correctly decoded.

43. A computer readable medium having stored thereon instructions causing a computer to execute the method of claim 1.

44. A computer readable medium having stored thereon instructions causing a computer to execute the method of claim 23.

## Patentansprüche

1. Datenübertragungsverfahren mit fester Blockgröße, das das Einfügen (3A-6) codierter Symbole, die aus einem vorhergehenden Fehlerkorrektur-codierten Block punktiert werden, in punktierte Symbol-Positionen von zumindest einem zukünftigen Block und das Senden (3A-7) des zumindest einen zukünftigen codierten Blockes umfasst.

2. Verfahren nach Anspruch 1, das weiterhin Folgendes umfasst:
Codieren (3A-2) von Eingangs-Datenblöcken zur Erzeugung einer Folge von jeweiligen codierten Blöcken;
für jeden codierten Block, Definieren (3A-3) einer jeweiligen Vielzahl von Sendewiederholungs-Anforderungs- (Wiederaussendungs-Anforderungs-) Blöcken, die jeweils einen jeweiligen Teilsatz eines Satzes von codierten Symbolen in punktierten Symbolpositionen des codierten Blockes aufweisen;
wobei das Einfügen (3A-6) codierter Symbole, die aus einem vorhergehenden codierten Block punktiert wurden, in punktierte Symbolpositionen von zumindest einem zukünftigen codierten Block das Einfügen von zumindest einem der Sendewiederholungs-Anforderungs-Blöcke eines vorhergehenden codierten Blockes in punktierte Symbolpositionen von zumindest einem zukünftigen codierten Block umfasst.

3. Verfahren nach Anspruch 1, das Folgendes umfasst:
Einfügen einiger codierter Symbole, die von dem vorhergehenden codierten Block punktiert wurden, in punktierte Symbolpositionen einer Vielzahl von zukünftigen codierten Blöcken.

4. Verfahren nach Anspruch 2, das weiterhin Folgendes umfasst:
Einfügen einer Anzahl von Sendewiederholungs-Anforderungs-Blöcken des vorhergehenden codierten Blockes in punktierte Symbolpositionen einer jeweiligen Anzahl von zukünftigen codierten Blöcken.

5. Verfahren nach Anspruch 1, das weiterhin Folgendes umfasst:
Unterhalten einer Sendewiederholungs-Anforderungs-Warteschlange (35), die irgendwelche codierten Blöcke identifiziert, die an einem Empfänger nicht erfolgreich empfangen wurden, wobei die Sendewiederholungs-Anforderungs-Warteschlange (35) eine Identifikation einer Folge einschließt, in der die codierten Blöcke nicht erfolgreich an einem Empfänger empfangen wurden.

6. Verfahren nach Anspruch 5, das weiterhin Folgendes umfasst:
Einfügen von Symbolen von vorhergehenden codierten Blöcken, die in der Sendewiederholungs-Anforderungs-Warteschlange identifiziert sind, auf der Grundlage der Folge.

7. Verfahren nach Anspruch 2, das weiterhin nach der Aussendung aller der Sendewiederholungs-Anforderungs-Blöcke für einen vorgegebenen vorhergehenden codierten Block die erneute Aussendung vorher ausgesandter Komponenten für den vorhergehenden codierten Block in punktierten Symbolpositionen des zumindest einen zukünftigen codierten Blockes umfasst.

8. Verfahren nach Anspruch 2, das weiterhin Folgendes umfasst:
nach dem Aussenden aller Sendewiederholungs-Anforderungs-Blöcke für einen vorgegebenen codierten Block, erneutes Aussenden des codierten Blockes.

9. Verfahren nach Anspruch 1, bei dem die feste Blockgröße für die Aussendung die gleiche wie die codierte Blockgröße ist, und dass in dem Fall, in dem es keine Symbole eines vorhergehenden codierten Blockes gibt, die eine Einfügung erfordern, der gesamte zukünftige codierte Block ausgesandt wird (3A-5).

10. Verfahren nach Anspruch 1, bei dem die feste Blockgröße für die Übertragung kleiner als die codierten Blockgröße ist und die codierten Blöcke immer in zumindest so vielen Symbol-Positionen, wie dies erforderlich ist, um die Blockgröße auf die feste Blockgröße für die Aussendung zu verringern, und in weiteren Positionen punktiert wird, in die codierte Symbole, die von einem vorhergehenden Fehlerkorrektur-Block punktiert wurden, einzufügen sind.

11. Verfahren nach Anspruch 1, bei dem eine Anzahl von Symbolen von vorhergehenden Blöcken, die in einen zukünftigen Block eingesetzt werden, als eine Funktion einer Anzahl von vorhergehenden Blöcken vergrößert wird, für die eine erneute Aussendung erforderlich ist.

12. Verfahren nach Anspruch 1, das weiterhin nach dem Einsetzen aller Symbole, die von einem bestimmten vorher codierten Block punktiert wurden, in einen oder mehrere zukünftige Blöcke das Einsetzen von Symbolen, die für den vorhergehenden Block ausgesandt wurden, in einen oder mehrere zukünftige Blöcke umfasst.

13. Verfahren nach Anspruch 11, bei dem die Anzahl von Symbolen von vorhergehenden Blöcken, die in einen zukünftigen Block eingesetzt werden, durch Belegen des gesamten zukünftigen Blockes vergrößert werden kann.

14. Verfahren nach Anspruch 1, das weiterhin Folgendes umfasst:
Empfangen einer Anforderung für eine erneute Aussendung bezüglich eines bestimmten vorher codierten Blockes;
wobei das Einsetzen (3A-6) von codierten Symbolen, die von einem vorherigen Fehlerkorrektur-codierten Block punktiert wurden, das Einfügen von codierten Symbolen umfasst, die von dem bestimmten vorher codierten Block punktiert wurden.

15. Verfahren nach Anspruch 1, das weiterhin Folgendes umfasst:
Unterhalten einer Sendewiederholungs-Anforderungs-Warteschlange (35), die codierte Blöcke identifiziert, die noch nicht erfolgreich ausgesandt wurden;
wobei das Einfügen (3A-6) codierter Symbole, die von einem vorhergehenden Fehlerkorrektur-codierten Block punktiert wurden, in punktierte Symbol-Positionen von zumindest einem zukünftigen codierten Block aufeinanderfolgend für vorhergehende codierte Blöcke durchgeführt wird, die in der Sendewiederholungs-Anforderungs-Warteschlange identifiziert sind.

16. Verfahren nach Anspruch 15, bei dem eine Identifikation eines bestimmten codierten Blockes zu der Sendewiederholungs-Anforderungs-Warteschlange (35) bei Empfang einer Anforderungswiederholung für den speziellen codierten Block hinzugefügt wird.

17. Verfahren nach Anspruch 15, bei dem eine Identifikation eines bestimmten codierten Blockes zu der Sendewiederholungs-Anforderungs-Warteschlange (35) hinzugefügt wird, nachdem eine Bestätigung für den bestimmten codierten Block über eine vorgegebene Zeitperiode nicht empfangen wurde.

18. Verfahren nach Anspruch 15, bei dem eine Identifikation eines bestimmten codierten Blockes von der Sendewiederholungs-Anforderungs-Warteschlange (35) entfernt wird, nachdem eine Bestätigung für den bestimmten codierten Block empfangen wurde.

19. Verfahren nach Anspruch 15, das weiterhin Folgendes umfasst:
Durchführen einer Leistungssteuerung als eine Funktion einer Anzahl von Anforderungswiederholungen in der Sendewiederholungs-Anforderungs-Warteschlange.

20. Verfahren nach Anspruch 1, das weiterhin Folgendes umfasst:
vor der Durchführung der Fehlerkorrektur-Codierung, Durchführen einer Fehlerdetektions-Codierung.

21. Verfahren nach Anspruch 20, bei dem die Durchführung einer Fehlerdetektions-Codierung das Hinzufügen eines CRC- (zyklische Redundanzprüfungs-) Feldes umfasst.

22. Verfahren nach Anspruch 15, das weiterhin Folgendes umfasst:
als eine Funktion der Anzahl von Anforderungswiederholungen in der Sendewiederholungs-Anforderungs-Warteschlange, Vergrößern einer Anzahl von Symbolen, die in dem zukünftigen codierten Block eingefügt werden, bis vollständige zukünftige codierte Blöcke ausschließlich für die erneute Aussendung bestimmt sind.

23. Datenempfangs-Verfahren, das Folgendes umfasst:
Auftrennen (4-2) eines empfangenen Blockes in Symbole eines derzeitigen Blockes und Symbole von zumindest einem Sendewiederholungs-Anforderungs-Block, die in punktierten Symbol-Positionen des empfangenen Blockes enthalten sind, wobei der Sendewiederholungs-Anforderungs-Block oder die Sendewiederholungs-Anforderungs-Blöcke Symbole von zumindest einem vorhergehenden Block enthalten;
Decodieren (4-5) der Symbole des derzeitigen Blockes;
für jeden vorhergehenden Block, für den es einen jeweiligen zumindest einen Sendewiederholungs-Anforderungs-Block gibt:
Kombinieren der Symbole des jeweiligen zumindest einen Sendewiederholungs-Anforderungs-Blockes mit einer vorhergehenden Version des vorhergehenden Blockes, um einen kombinierten Block zu erzeugen, und Decodieren (4-5) der Symbole des kombinierten Blockes.

24. Verfahren nach Anspruch 23, das weiterhin Folgendes umfasst:
Senden (4-11) einer Anforderungswiederholung bezüglich des derzeitigen Blockes, wenn er nicht erfolgreich decodiert wurde; und
für jeden kombinierten Block, Senden (4-11) einer Anforderungswiederholung bezüglich des kombinierten Blockes, wenn der kombinierte Block nicht erfolgreich decodiert wird.

25. Verfahren nach Anspruch 23, das weiterhin Folgendes umfasst:
Speichern (4-4) der Symbole des derzeitigen Blockes und jedes kombinierten Blockes in einer Speicherstruktur;
in dem Fall, dass der derzeitige Block und/oder der kombinierte Block erfolgreich codiert wird, Löschen (4-7) des jeweiligen Blockes aus der Speicherstruktur.

26. Verfahren nach Anspruch 23, das weiterhin Folgendes umfasst:
Senden einer Bestätigung jedesmal dann, wenn ein Block korrekt decodiert wird.

27. Sender (31), mit:
einem Fehlerkorrektur-Codierer (32), der zum Codieren einer Folge von Eingangs-Datenblöcken ausgebildet ist, um eine entsprechende Folge von codierten Blöcken mit einer festen Länge zu erzeugen;
einer Punktierschaltung, die zum Einfügen codierter Symbole, die von einem vorhergehenden codierten Block punktiert wurden, in punktierte Symbolpositionen von zumindest einem zukünftigen codierten Block ausgebildet ist, der auszusenden ist.

28. Sender nach Anspruch 27, der weiterhin Folgendes umfasst:
eine Speicherstruktur (36), die so ausgebildet ist, dass sie für jeden codierten Block eine jeweilige Vielzahl von Sendewiederholungs-Anforderungs-Blöcken enthält, die jeweils einen jeweiligen Teilsatz des jeweiligen Satzes von codierten Symbolen enthalten, die von dem codierten Block punktiert wurden;
wobei die Punktierungsschaltung so ausgebildet ist, dass sie einen der Sendewiederholungs-Anforderungs-Blöcke eines vorhergehenden codierten Blockes in punktierte Symbolpositionen eines zukünftigen codierten Blockes einfügt.

29. Sender nach Anspruch 27, bei dem die Punktierungsschaltung so ausgebildet ist, dass sie eine Vielzahl von Teilsätzen des Satzes von codierten Symbolen, die von dem vorhergehenden codierten Block punktiert wurden, in punktierte Symbol-Positionen einer jeweiligen Vielzahl von zukünftigen Blöcken einfügt.

30. Sender nach Anspruch 27, der weiterhin Folgendes umfasst:
eine Sendewiederholungs-Anforderungs-Warteschlange (35), die eine Folge von codierten Blöcken identifiziert, die nicht erfolgreich an einem Empfänger empfangen wurden;
wobei die Punktierungsschaltung so ausgebildet ist, dass sie Symbole, die aus codierten Blöcken punktiert wurden, die in der Sendewiederholungs-Anforderungs-Warteschlange identifiziert sind, auf der Grundlage der Folge einfügt.

31. Sender nach Anspruch 27, der weiterhin so ausgebildet ist, dass er nach dem Codieren jedes Eingangs-Datenblockes zur Erzeugung des jeweiligen codierten Blockes die jeweilige Anzahl von Sendewiederholungs-Anforderungs-Blöcken in der Speicherstruktur (36) zusammen mit dem codierten Block speichert.

32. Sender nach Anspruch 29, der zur erneuten Aussendung eines vorgegebenen codierten Blockes ausgebildet ist, nachdem alle Anforderungswiederholungs-Blöcke für den vorgegebenen codierten Block ausgesandt wurden.

33. Sender nach Anspruch 27, der weiterhin Folgendes umfasst:
einen zum Empfang einer Anforderung für eine erneute Aussendung eines bestimmten vorhergehenden Blockes ausgebildeten Eingang (39);
wobei die Punktierungsschaltung zum Einfügen von Symbolen ausgebildet ist, die aus dem bestimmten vorhergehenden codierten Block punktiert wurden.

34. Sender nach Anspruch 27, bei dem die Punktierungsschaltung so ausgebildet ist, dass sie codierte Symbole, die von einem vorhergehenden Fehlerkorrektur-codierten Block punktiert wurden, in punktierte Symbol-Positionen von zumindest einem zukünftigen codierten Block sequenziell für vorhergehende codierte Blöcke einfügt, die in der Sendewiederholungs-Anforderungs-Warteschlange identifziert sind.

35. Sender nach Anspruch 34, der weiterhin so ausgebildet ist, dass er eine Identifikation eines bestimmten codierten Blockes zu der Anforderungswiederholungs-Warteschlange bei Empfang einer Anforderungswiederholung für diesen codierten Block hinzufügt.

36. Sender nach Anspruch 34, der weiterhin so ausgebildet ist, dass er eine Identifikation eines bestimmten codierten Blockes zu der Anforderungswiederholungs-Warteschlange hinzufügt, nachdem eine Bestätigung für den bestimmten codierten Block über eine vorgegebene Zeitperiode nicht empfangen wurde.

37. Sender nach Anspruch 34, der weiterhin so ausgebildet ist, dass er die Identifikation eines bestimmten codierten Blockes von der Anforderungswiederholungs-Warteschlange entfernt, nachdem eine Bestätigung für den bestimmten codierten Block empfangen wurde.

38. Sender nach Anspruch 27, der weiterhin zur Durchführung einer Leistungssteuerung als eine Funktion der Anzahl von empfangenen Anforderungswiederholungen ausgebildet ist.

39. Sender nach Anspruch 27, der weiterhin einen Fehlerdetektions-Codierer (30) umfasst, der eine Fehlerdetektions-Codierung vor der Durchführung der Fehlerkorrektur-Codierung durchführt.

40. Empfänger (33) mit:
einem Demultiplexer (42), der zur Trennung eines empfangenen Blockes in Symbole eines derzeitigen Blockes und Symbole von zumindest einem Sendewiederholungs-Anforderungs-Block ausgebildet ist, die in punktierten Symbol-Positionen des empfangenen Blockes enthalten sind, wobei der zumindest eine Sendewiederholungs-Anforderungs-Block Symbole von zumindest einem vorhergehenden Block enthält;
ersten Decodierschaltungen (46), die zur Decodierung der Symbole des derzeitigen Blockes ausgebildet sind;
einem Kombinierer (55), der zur Kombination der Symbole des zumindest einen Sendewiederholungs-Anforderungs-Blockes mit einer vorhergehenden Version jedes des zumindest einen vorhergehenden Blockes ausgebildet ist, um einen kombinierten Block bezüglich jedes des zumindest einen vorhergehenden Blockes zu erzeugen; und
zweiten Decodierschaltungen (48), die zum Decodieren der kombinierten Blöcke ausgebildet sind.

41. Empfänger nach Anspruch 40, der weiterhin Folgendes umfasst:
Neuaussendungs-Anforderungseinrichtungen (52), die zum Senden einer Wiederholungsanforderung bezüglich des derzeitigen Blockes, wenn dieser nicht erfolgreich decodiert wird, und für jeden kombinierten Block zum Senden einer Anforderungswiederholung bezüglich des kombinierten Blockes ausgebildet sind, wenn der kombinierte Block nicht erfolgreich decodiert wird.

42. Empfänger nach Anspruch 40, der weiterhin Folgendes umfasst:
Bestätigungseinrichtungen, die zum Senden einer Bestätigung jedesmal dann ausgebildet sind, wenn ein Block richtig decodiert wurde.

43. Computerlesbares Medium, auf dem Befehle gespeichert sind, die bewirken, dass ein Computer das Verfahren nach Anspruch 1 ausführt.

44. Computerlesbares Medium, auf dem Befehle gespeichert sind, die bewirken, dass ein Computer das Verfahren nach Anspruch 23 ausführt.

## Revendications

1. Un procédé d'émission de données à taille de bloc fixée comprenant l'insertion (3A-6) de symboles codés poinçonnés à partir d'un bloc codé de correction d'erreurs précédent, dans des emplacements de symboles poinçonnés d'au moins un bloc codé futur, et l'émission (3A-7) de l'au moins un bloc codé futur.

2. Un procédé selon la revendication 1, comprenant en outre :
le codage (3A-2) de blocs de données d'entrée pour produire une séquence de blocs codés respectifs;
pour chaque bloc codé, la définition (3A-3) d'une pluralité respective de blocs de requête de réémission contenant chacun un sous-ensemble respectif d'un ensemble de symboles codés, dans des emplacements de symboles poinçonnés du bloc codé;
dans lequel l'insertion (3A-6) de symboles codés poinçonnés à partir d'un bloc codé précédent, dans des emplacements de symboles poinçonnés d'au moins un bloc codé futur, comprend l'insertion d'au moins un des blocs de requête de réémission d'un bloc codé précédent, dans des emplacements de symboles poinçonnés d'au moins un bloc codé futur.

3. Un procédé selon la revendication 1, comprenant en outre :
l'insertion de certains symboles codés poinçonnés à partir du bloc codé précédent, dans des emplacements de symboles poinçonnés d'une pluralité de blocs codés futurs.

4. Un procédé selon la revendication 2, comprenant en outre :
l'insertion d'une pluralité de blocs de requête de réémission du bloc codé précédent dans des emplacements de symboles poinçonnés d'une pluralité respective de blocs codés futurs.

5. Un procédé selon la revendication 1, comprenant en outre :
l'entretien d'une file d'attente de requêtes de réémission (35) identifiant des blocs codés quelconques qui n'ont pas été reçus avec succès à un récepteur, la file d'attente de requêtes de réémission (35) incluant une identification d'une séquence dans laquelle les blocs codés n'ont pas été reçus avec succès à un récepteur.

6. Un procédé selon la revendication 5, comprenant en outre :
l'insertion de symboles de blocs codés précédents identifiés dans la file d'attente de requêtes de réémission, sur la base de la séquence.

7. Un procédé selon la revendication 2, comprenant en outre après l'émission de tous les blocs de requête de réémission pour un bloc codé précédent donné, la réémission de composants émis précédemment pour le bloc codé précédent dans des emplacements de symboles poinçonnés de l'au moins un bloc codé futur.

8. Un procédé selon la revendication 2, comprenant en outre :
après l'émission de tous les blocs de requête de réémission pour un bloc codé donné, la réémission du bloc codé.

9. Un procédé selon la revendication 1, dans lequel la taille de bloc fixée pour l'émission est la même que la taille de bloc codé, et dans le cas où il n'y a pas de symboles d'un bloc codé précédent qui exige l'insertion, le bloc codé futur entier est émis (3A-5).

10. Un procédé selon la revendication 1, dans lequel la taille de bloc fixée pour l'émission est inférieure à la taille de bloc codé, et les blocs codés sont toujours poinçonnés dans au moins autant d'emplacements de symboles que ce qui est exigé pour réduire la taille de bloc à la taille de bloc fixée pour l'émission, et dans des emplacements supplémentaires dans lesquels des symboles codés poinçonnés à partir d'un bloc de correction d'erreurs précédent doivent être insérés.

11. Un procédé selon la revendication 1, dans lequel un nombre de symboles provenant de blocs précédents insérés dans un bloc futur est augmenté en fonction d'un nombre de blocs précédents pour lesquels une réémission est exigée.

12. Un procédé selon la revendication 1, comprenant en outre, après l'insertion dans un ou plusieurs blocs futurs de tous les symboles poinçonnés à partir d'un bloc codé précédent particulier, l'insertion dans un ou plusieurs blocs futurs de symboles qui ont été émis pour le bloc précédent.

13. Un procédé selon la revendication 11, dans lequel le nombre de symboles provenant de blocs précédents qui sont insérés dans un bloc futur peut être augmenté de façon à occuper le bloc futur entier.

14. Un procédé selon la revendication 1, comprenant en outre :
la réception d'une requête de réémission concernant un bloc codé précédent particulier;
dans lequel l'insertion (3A-6) de symboles codés poinçonnés à partir d'un bloc codé de correction d'erreurs précédent, comprend l'insertion de symboles codés poinçonnés à partir du bloc codé précédent particulier.

15. Un procédé selon la revendication 1, comprenant en outre :
l'entretien d'une file d'attente de requêtes de réémission (35) identifiant des blocs codés qui n'ont pas été émis avec succès;
dans lequel l'insertion (3A-6) de symboles codés poinçonnés à partir d'un bloc codé de correction d'erreurs précédent, dans des emplacements de symboles poinçonnés d'au moins un bloc codé futur, est effectuée séquentiellement pour des blocs codés précédents identifiés dans la file d'attente de requêtes de réémission.

16. Un procédé selon la revendication 15, dans lequel une identification d'un bloc codé particulier est ajoutée à la file d'attente de requêtes de réémission (35) sous l'effet de la réception d'une requête de réémission pour le bloc codé particulier.

17. Un procédé selon la revendication 15, dans lequel une identification d'un bloc codé particulier est ajoutée à la file d'attente de requêtes de réémission (35) après qu'un acquittement n'a pas été reçu pour le bloc codé particulier pendant un intervalle de temps prédéterminé.

18. Un procédé selon la revendication 15, dans lequel une identification d'un bloc codé particulier est retirée de la file d'attente de requêtes de réémission (35) après qu'un acquittement a été reçu pour le bloc codé particulier.

19. Un procédé selon la revendication 15, comprenant en outre:
l'accomplissement d'une commande de puissance en fonction d'un nombre de requêtes de réémission dans la file d'attente de requêtes de réémission.

20. Un procédé selon la revendication 1, comprenant en outre :
avant l'accomplissement du codage de correction d'erreurs, l'accomplissement d'un codage de détection d'erreurs.

21. Un procédé selon la revendication 20, dans lequel l'accomplissement d'un codage de détection d'erreurs comprend l'ajout d'un champ de CRC (contrôle par redondance cyclique).

22. Un procédé selon la revendication 15, comprenant en outre:
en fonction d'un nombre de requêtes de réémission dans la file d'attente de requêtes de réémission, l'augmentation d'un nombre de symboles insérés dans le bloc codé futur, jusqu'à ce que des blocs codés futurs entiers soient dédiés à la réémission.

23. Un procédé de réception de données comprenant :
la séparation (4-2) d'un bloc reçu en symboles d'un bloc présent et en symboles d'au moins un bloc de requête de réémission contenus dans des emplacements de symboles poinçonnés du bloc reçu, le ou les blocs de requête de réémission contenant des symboles d'au moins un bloc précédent;
le décodage (4-5) des symboles du bloc présent;
pour chaque bloc présent pour lequel il y a au moins un bloc de requête de réémission respectif :
la combinaison des symboles de l'au moins un bloc de requête de réémission respectif avec une version précédente du bloc précédent pour produire un bloc combiné, et le décodage (4-8) des symboles du bloc combiné.

24. Un procédé selon la revendication 23, comprenant en outre:
l'envoi (4-11) d'une requête de réémission concernant le bloc présent s'il n'est pas décodé avec succès; et
pour chaque bloc combiné, l'envoi (4-11) d'une requête de réémission concernant le bloc combiné, si le bloc combiné n'est pas décodé avec succès.

25. Un procédé selon la revendication 23, comprenant en outre:
le stockage (4-4) dans une structure de mémoire des symboles du bloc présent et de chaque bloc combiné;
dans le cas où le bloc présent et/ou le bloc combiné est décodé avec succès, la suppression (4-7) du bloc respectif dans la structure de mémoire.

26. Un procédé selon la revendication 23, comprenant en outre:
l'envoi d'un acquittement chaque fois qu'un bloc est décodé correctement.

27. Un émetteur (31) comprenant :
un codeur de correction d'erreurs (32) adapté pour coder une séquence de blocs de données d'entrée, pour produire une séquence correspondante de blocs codés ayant une longueur fixée;
un circuit de poinçonnage adapté pour insérer des symboles codés poinçonnés à partir d'un bloc codé précédent, dans des emplacements de symboles poinçonnés d'au moins un bloc codé futur à émettre.

28. Un émetteur selon la revendication 27, comprenant en outre:
une structure de mémoire (36) adaptée pour contenir, pour chaque bloc codé, une pluralité respective de blocs de requêtes de réémission contenant chacun un sous-ensemble respectif de l'ensemble respectif de symboles codés poinçonnés à partir du bloc codé;
dans lequel le circuit de poinçonnage est adapté pour insérer l'un des blocs de requêtes de réémission d'un bloc codé précédent dans des emplacements de symboles poinçonnés d'un bloc codé futur.

29. Un émetteur selon la revendication 27, dans lequel le circuit de poinçonnage est adapté pour insérer une pluralité de sous-ensembles de l'ensemble de symboles codés poinçonnés à partir du bloc codé précédent, dans des emplacements de symboles poinçonnés d'une pluralité respective de blocs codés futurs.

30. Un émetteur selon la revendication 27, comprenant en outre:
une file d'attente de requêtes de réémission (35) identifiant une séquence de blocs codés qui n'ont pas été reçus avec succès à un récepteur;
dans lequel le circuit de poinçonnage est adapté pour insérer des symboles poinçonnés à partir de blocs codés identifiés dans la file d'attente de requêtes de réémission, sur la base de la séquence.

31. Un émetteur selon la revendication 27, adapté en outre pour, après le codage de chaque bloc de données d'entrée pour produire le bloc codé respectif, stocker la pluralité respective de blocs de requêtes de réémission dans la structure de mémoire (36) conjointement au bloc codé.

32. Un émetteur selon la revendication 29, adapté pour réémettre un bloc codé donné après que tous les blocs de requêtes de réémission pour le bloc codé donné ont été émis.

33. Un émetteur selon la revendication 27, comprenant en outre:
une entrée (39) adaptée pour recevoir une requête de réémission d'un bloc codé précédent particulier;
dans lequel le circuit de poinçonnage est adapté pour insérer des symboles poinçonnés à partir du bloc codé précédent particulier.

34. Un émetteur selon la revendication 27, dans lequel le circuit de poinçonnage est adapté pour insérer des symboles codés poinçonnés à partir d'un bloc codé de correction d'erreurs précédent, dans des emplacements de symboles poinçonnés d'au moins un bloc codé futur, séquentiellement pour des blocs codés précédents identifiés dans la file d'attente de requêtes de réémission.

35. Un émetteur selon la revendication 34, adapté en outre pour ajouter une identification d'un bloc codé particulier à la file d'attente de requêtes de réémission, à la réception d'une requête de réémission pour ce bloc codé.

36. Un émetteur selon la revendication 34, adapté en outre pour ajouter une identification d'un bloc codé particulier à la file d'attente de requêtes de réémission après qu'un acquittement n'a pas été reçu pour le bloc codé particulier pendant un intervalle de temps prédéterminé.

37. Un émetteur selon la revendication 34, adapté en outre pour supprimer l'identification d'un bloc codé particulier dans la file d'attente de requêtes de réémission après qu'un acquittement a été reçu pour le bloc codé particulier.

38. Un émetteur selon la revendication 27, adapté en outre pour effectuer une commande de puissance en fonction d'un nombre exigé de requêtes de réémission.

39. Un émetteur selon la revendication 27, comprenant en outre un codeur de détection d'erreurs (30) qui effectue un codage de détection d'erreurs avant d'effectuer le codage de correction d'erreurs.

40. Un récepteur (33), comprenant :
un démultiplexeur (42) adapté pour séparer un bloc reçu en symboles d'un bloc présent et en symboles d'au moins un bloc de requête de réémission contenus dans des emplacements de symboles poinçonnés du bloc reçu, l'au moins un bloc de requête de réémission contenant des symboles d'au moins un bloc précédent;
un premier circuit de décodage (46) adapté pour décoder les symboles du bloc présent;
un dispositif de combinaison (50) adapté pour combiner les symboles de l'au moins un bloc de requête de réémission avec une version précédente de chacun de l'au moins un bloc précédent, pour produire un bloc combiné concernant chacun de l'au moins un bloc précédent; et
un second circuit de décodage (48) adapté pour décoder les blocs combinés.

41. Un récepteur selon la revendication 40, comprenant en outre :
un moyen de requête de réémission (52) adapté pour envoyer une requête de réémission concernant le bloc présent s'il n'est pas décodé avec succès, et pour chaque bloc combiné, pour envoyer une requête de réémission concernant le bloc combiné si le bloc combiné n'est pas décodé avec succès.

42. Un récepteur selon la revendication 40, comprenant en outre :
un moyen d'acquittement adapté pour envoyer un acquittement chaque fois qu'un bloc est décodé correctement.

43. Un support lisible par ordinateur sur lequel sont stockées des instructions faisant exécuter à l'ordinateur le procédé de la revendication 1.

44. Un support lisible par ordinateur sur lequel sont stockées des instructions faisant exécuter à l'ordinateur le procédé de la revendication 23.
